# EUROPEAN PATENT SPECIFICATION

(11) **EP 3 269 773 B1**
(45) Date of publication and mention of the grant of the patent: **29.04.2020**
(21) Application number: 16761785.1
(22) Date of filing: 09.03.2016
(51) Int. Cl.: C08K 3/26, B32B 27/08, B32B 27/18, B32B 27/22, B32B 27/36, B32B 27/20, B32B 7/12, C08K 3/00, B32B 15/09, C08L 67/02

(54) **POLYESTER FILM FOR USE IN METAL PLATE LAMINATE**
POLYESTERFOLIE ZUR VERWENDUNG IN METALLPLATTENLAMINATEN
FILM POLYESTER À UTILISER DANS UN STRATIFIÉ DE PLAQUE MÉTALLIQUE

(30) Priority: 10.03.2015 JP 2015046807
(43) Date of publication of application: 17.01.2018
(73) Proprietor: Toyobo Co., Ltd., Osaka-shi Osaka 530-8230 (JP)
(72) Inventor: NAKAYA, Tadashi, Inuyama-shi Aichi 484-8508 (JP); IKEHATA, Yoshitomo, Inuyama-shi Aichi 484-8508 (JP); NAKANO, Mahiro, Inuyama-shi Aichi 484-8508 (JP)
(74) Representative: Vossius & Partner Patentanwälte Rechtsanwälte mbB
(86) International application number: PCT/JP2016/057359
(87) International publication number: WO 2016/143818

(56) References cited:
- EP-A1- 0 586 161
- JP-A- H0 762 116
- JP-A- H11 335 540
- JP-A- 2001 294 734
- JP-A- 2002 264 259
- JP-A- 2003 253 017
- JP-A- 2007 203 570
- JP-A- 2010 221 413
- DATABASE WPI Week 201303 Thomson Scientific, London, GB; AN 2012-R29117 XP002785260, -& JP 2012 251140 A (TOYOBO CO LTD) 20 December 2012 (2012-12-20)
- DATABASE WPI Week 199819 Thomson Scientific, London, GB; AN 1998-212862 XP002785261, -& JP H10 60131 A (UNITIKA LTD) 3 March 1998 (1998-03-03)

## Description

### TECHNICAL FIELD

The present invention relates to a polyester-based film for laminating a metal plate, and particularly relates to a polyester-based film for laminating a metal plate used to be laminated on the inner surface of a can, in a 3-piece can, for the purpose of corrosion prevention of a metal container for food and drink such as refreshing drink, coffee and canned food, and the like.

### BACKGROUND ART

Conventionally, a coating is generally applied for corrosion prevention of the inner and outer surfaces of a metal can, and a thermosetting resin is used as the coating.

In the method of coating the surface of a metal can with a thermosetting resin, after applying a coating obtained by dissolving a thermosetting resin in a solvent to the surface of a metal can, heating at a high temperature for a long time like not less than 190°C for a few minutes is generally required. Also, since a large amount of an organic solvent scatters at baking, improvements such as process simplification and anti-pollution are demanded.

Also, in a coating film formed in the above conditions, remaining of a small amount of an organic solvent cannot be consequently avoided, and for example, when a metal can on which the coating film is formed is filled with food and drink, the organic solvent may transfer to the content of the metal can, and exert an adverse effect on taste and odor of the food and drink or safety to a human body. Furthermore, since a low molecular weight substance caused by the additive contained in the coating and incomplete crosslinking reaction is contained, these substances may transfer to the content of the metal can, and exert the same adverse effect as in the case of the residual organic solvent described above.

As a means for solving the above problem, there is a method of using a thermoplastic resin film. For example, it is a method of suppressing exertion of the adverse effect of the low molecular weight substance caused by the additive contained in the coating and incomplete crosslinking reaction on the content of the metal can by previously applying a thermosetting adhesive to a polyolefin film such as a polyester-based film or a polypropylene film, and then sticking the film to a metal plate.

However, for example, when a polyolefin film such as polypropylene is used as the thermoplastic resin film, operation environmental problem and process simplification are possible, but transfer of the low molecular weight substance from the inner surface side of the metal can to the content cannot be sufficiently suppressed. Also, such film is inferior in heat resistance, thus, in the case of being subjected to heat history in the can making process and heat history in a retorting treatment after can making and the like, the thermoplastic resin film stuck to the metal plate may peel off.

On the other hand, for example, Patent Document 1 describes a method of laminating a polyester-based laminated film having an upper layer and a lower layer having a function of adhesive on a metal plate. By using this method, operation environmental problem and process simplification are achieved, and the problem on heat resistance of the polyester-based film can be also improved, and furthermore, transfer of the low molecular weight substance from the inner surface side of the metal can to the content is small, thus the film is excellent in deterioration prevention on taste and odor of the food and drink, so-called, aroma retaining property. However, the film does not smoothly slip with a jig used for can making, thus may be inferior in can making properties.

Also, a laminated film having a layer having heat resistance as an upper layer and a layer having a function of adhesive on a thermoplastic resin film as a lower layer has been known (for example, Patent Document 2). However, when a polyethylene terephthalate resin is singly used in a layer on the surface on the opposite side to the adhesive surface (surface on the side in contact with food and drink), a coating applied for repairing a joint part is hard to adhere, and the coating may peel off.

On the other hand, when a low melting point component is used together in the layer of the surface on the side in contact with food and drink, like the polyester-based film for laminate disclosed in the Patent Document 3, a coating applied for repairing a joint part is easy to adhere. However, stains adhere to the roll in the process of laminating a film on the metal plate at high speed, thus it arises the need to interrupt production and clean the roll.

In addition, a polyester-based film for laminating a metal plate that is composed of two layers of layer A and layer B and uses layer B as a layer in contact with the metal plate has been known (for example, Patent Document 4). When a metal container is formed from a laminated film-laminated metal plate obtained by laminating this polyester-based film on a metal plate, layer A becomes a layer in contact with food that is a content. In layer A, a polybutylene terephthalate component that has a low melting point and is easy to be crystallized is used. Therefore, after can making, there is a problem that the inner surface of the can is easily corrosive while the can is filled with a content and stored for a long period.

### PRIOR ART DOCUMENTS

### PATENT DOCUMENTS

Patent Document 1: JP-A-10-60131
Patent Document 2: JP-A-2000-71406
Patent Document 3: JP-A-2012-251140
Patent Document 4: JP-B-4407269

### SUMMARY OF THE INVENTION

### PROBLEMS TO BE SOLVED BY THE INVENTION

The present invention has been made in view of the situation described above, and an object thereof is to provide a polyester-based film for laminating a metal plate having corrosion resistance and an aroma retaining property suitable for storing food and drink, and excellent can making properties, in which a joint part after can making is easily repaired.

### SOLUTIONS TO THE PROBLEMS

To achieve the above purpose, a polyester-based film for laminating a metal plate of the present invention is formed from a composition containing a polyester-based resin mainly consisting of ethylene terephthalate, and the polyester-based resin has a total content of ethylene terephthalate units and diethylene terephthalate units of not less than 95% by mol and not more than 98% by mol, and a content of a unit other than ethylene terephthalate units and diethylene terephthalate units of 2 to 5% by mol, in 100% by mol of the total constituent units of the polyester, wherein the unit other than ethylene terephthalate and diethylene terephthalate units contains an ethylene isophthalate unit, and the content of indeterminate inorganic fine particles is 0.5 to 2.0% by mass, in 100% by mass of the composition, and wherein the polyester-based resin has an intrinsic viscosity of 0.5 to 0.7 dl/g.

It is preferable that the polyester-based resin comprises not less than 2% by mol and not more than 5% by mol of ethylene isophthalate units, in 100% by mol of the total constituent units of the polyester.

The present invention includes a laminated film for laminating a metal plate obtained by laminating an adhesive layer on the polyester-based film for laminating a metal plate. It is preferable that the resin constituting the adhesive layer comprises 80 to 100% by mass of polyester-based resin (B1) mainly consisting of ethylene terephthalate, and 0 to 20% by mass of polyester-based resin (B2) having a different composition from the polyester-based resin (B1), and the polyester-based resin (B1) comprises not less than 5% by mol and not more than 15% by mol of ethylene isophthalate units, in 100% by mol of the total constituent units of the polyester.

It is preferable that the polyester-based resin (B1) comprises polyethylene terephthalate and polyethylene isophthalate. In addition, it is preferable that the polyester-based resin (B2) is polybutylene terephthalate.

The present invention includes a film-laminated metal plate comprising a metal plate and the laminated film for laminating a metal plate, obtained by laminating the adhesive layer on at least one surface of the metal plate. Furthermore, the present invention includes a metal container obtained by molding the film-laminated metal plate.

### EFFECT OF THE INVENTION

The polyester-based film of the present invention has excellent aroma retaining property and corrosion resistance, and can be adhered to a metal plate at a temperature lower than a conventional temperature. Also, when using the polyester-based film of the present invention, it is possible to make a can at a high speed, and the polyester-based film of the present invention is also suitable for repairing a joint part. Even when performing heat treatment for improvement in finishing properties of cans during can-making processing, performing heat treatment for repairing the joint part of a can, or the like, a repairing tape is not peeled off. Therefore, it is suitable to use the polyester-based film of the present invention as a film for a metal container for storing drink or food.

### MODE FOR CARRYING OUT THE INVENTION

The polyester-based film for laminating a metal plate of the present invention (hereinafter, may be simply referred to as the film) is a film as defined in claim 1.

The film of the present invention is formed from a composition containing a polyester-based resin mainly consisting of ethylene terephthalate. Specifically, a resin constituting the film of the present invention (hereinafter, referred to as Resin A) has a total content of ethylene terephthalate units and diethylene terephthalate units of not less than 95% by mol and not more than 98% by mol, in 100% by mol of the total constituent units of the polyester. When the total content of ethylene terephthalate units and diethylene terephthalate units is less than 95% by mol, the film may be inferior in heat resistance. Also, when subjecting a film to heat treatment at a high temperature during can making, a trouble such as shrinkage or peeling may occur.

From the viewpoint of corrosion resistance, Resin A contains a unit other than ethylene terephthalate units and diethylene terephthalate units of 2 to 5% by mol and preferably 2 to 3% by mol, in 100% by mol of the total constituent units of the polyester. The unit other than ethylene terephthalate units and diethylene terephthalate units contains an ethylene isophthalate unit and preferably is an ethylene isophthalate unit. By using ethylene isophthalate units, slipperiness of the film and can making properties are improved, and the inorganic fine particles can be prevented from falling from the film.

It is preferred that the unit constituting Resin A comprises ethylene terephthalate units and ethylene isophthalate units, and more specifically, Resin A comprises polyethylene terephthalate and polyethylene isophthalate.

Also, in Resin A, the unit derived from diethylene glycol generated as a by-product during polymerization is preferably not more than 5% by mol and more preferably not more than 3% by mol, in 100% by mol of the total constituent units of the polyester.

Resin A may use one kind of polyester polymer alone or may use a mixture of a plurality of polyester polymers.

The resin constituting the film of the present invention has an intrinsic viscosity of 0.5 to 0.7 dl/g, more preferably 0.55 to 0.67 dl/g, further preferably 0.57 to 0.65 dl/g, and particularly preferably 0.58 to 0.60 dl/g. When the intrinsic viscosity is less than 0.5 dl/g, film-forming workability is very poor, and even when a film can be formed, a thermally degraded substance derived from a low molecular weight substance is generated, thus it is difficult to use it as a polyester-based film for laminating a metal plate. Also, when the film of the present invention is used in contact with food and drink, it may be inferior in aroma retaining property, due to the influence of a low molecular weight substance in the film. In addition, when the intrinsic viscosity exceeds 0.7 dl/g, as a result of applying excessive heat and pressure when melting a resin and extruding the melted resin by an extruder, in a film forming process, a low molecular weight substance generated by being thermally decomposed in the extruder is increased, and extrusion load is too large. Therefore, it is difficult to extrude a uniform amount of the resin from the extruder, and may be difficult to obtain a polyester-based film for laminating a metal plate with good quality.

The film of the present invention can improve can-making processability by containing inorganic fine particles, and flaw resistance (scratch resistance) can be imparted. These inorganic fine particles may be used alone or two or more kinds thereof may be used. Examples of the inorganic fine particles include metal oxides such as silica, alumina, zirconia and titanium oxide; composite oxides such as kaolin, zeolite, sericite and sepiolite; sulfates such as calcium sulfate and barium sulfate; phosphates such as calcium phosphate and zirconium phosphate; carbonates such as calcium carbonate, and the like, and among them, metal oxides are preferable. These fine particles may be a natural material or a synthetic material.

Also, the film of the present invention may contain organic fine particles such as crosslinked polymer particles. Examples of the crosslinked polymer particles include acrylic monomers such as acrylic acid, methacrylic acid, acrylic acid ester and methacrylic acid ester, styrenic monomers such as styrene and alkyl-substituted styrenes, copolymers with crosslinkable monomers such as divinylbenzene, divinylsulfone, ethylene glycol dimethacrylate, trimethylolpropane trimethylacrylate or pentaerythritol tetramethylacrylate, melamine resins, benzoguanamine-based resins, phenolic resins, silicone-based resins, and the like, and among them, (co)polymers of acrylic monomers are preferred.

In order to adjust particles size and particle size distribution of fine particles, pulverization, classification and the like may be performed. In the present invention, indeterminate (shape other than spherical and nearly spherical) inorganic fine particles are contained. It is not preferred when only spherical and nearly spherical inorganic fine particles are contained, since damage to the film and falling from the film occur.

The average particle diameter of the indeterminate inorganic fine particles is preferably 0.5 to 5.0 µm and more preferably 0.8 to 4.0 µm. When the average particle diameter is less than 0.5 µm, improving effect of slipperiness between the film and a metal plate at high temperature is reduced, and the film may be likely to be damaged. On the other hand, when the average particle diameter exceeds 5.0 µm, the above effect may be saturated, the fine particles may be likely to fall from the film, the film may likely to break during film formation, impact strength may be reduced, or the like. The method for measuring the average particle diameter of the inorganic fine particles will be described later.

The content of the indeterminate inorganic fine particles in the film is 0.5 to 2.0% by mass and preferably 0.6 to 1.5% by mass, in 100% by mass of the composition containing a polyester-based resin. When the content of the indeterminate inorganic fine particles in the film is less than 0.5% by mass, improving effect of slipperiness between the film and a metal plate at high temperature is reduced, and the film may be likely to be damaged. When the content of the indeterminate inorganic fine particles in the film exceeds 2.0% by mass, the above effect may be saturated, film-forming properties may be reduced, impact strength may be reduced, or the like. Also, by appropriately adding fine particles so as to have appropriate cloudiness, namely, a haze of 25 to 60%, it is possible to prevent a malfunction of a defect detector that detects a processing defect of a metal laminate plate obtained by laminating a film on a metal plate.

In blending of the indeterminate inorganic fine particles to the composition containing a polyester-based resin, the indeterminate inorganic fine particles may be added in the process of producing a polyester-based resin, or the inorganic fine particles may be added after preparing a polyester-based resin, and melt-kneaded. Also, a polyester-based resin containing the indeterminate inorganic fine particles at a high concentration is produced, and the obtained polyester-based resin as a master batch can be also melt-knead with a polyester-based resin without containing the compound or containing a small amount of the compound.

It is practical that the dynamic friction coefficient of the film surface of the present invention at 80°C is preferably not more than 0.45, more preferably not more than 0.43, and further preferably not more than 0.40. When the dynamic friction coefficient of the film surface is not more than 0.45, scratch on the film in the can making process or the like, contamination of an apparatus for making a can due to shaving of the film in the can making process and the like can be prevented.

Also, in the film of the present invention, it is necessary to reduce the content of an ethylene terephthalate cyclic trimer as much as possible, so as not to impair the protecting effect of food and drink, and beautiful appearance of a metal can, and specifically, the content of an ethylene terephthalate cyclic trimer is preferably not more than 0.7% by mass and more preferably not more than 0.5% by mass in 100% by mass of the composition containing a polyester-based resin. The film of the present invention with a low content of the cyclic trimer can be produced, for example, by a method of producing a resin with a low content of the cyclic trimer such as a vacuum heat treatment method or a solid phase polymerization method, a method of extracting the cyclic trimer with water or an organic solvent after producing polyester, a method of combining these methods, or the like.

The film of the present invention can contain various additives such as antioxidant, heat stabilizer, UV absorber, plasticizer, pigment, antistatic agent, lubricating agent and crystal nucleating agent, as necessary. In the film of the present invention, the various additives may be contained in a ratio of not more than 5% by mass, in 100% by mass of the composition containing a polyester-based resin.

### (Adhesive Layer)

The film of the present invention may be formed into a laminated film further provided with an adhesive layer. The adhesive layer is preferably formed from a composition containing a polyester-based resin mainly consisting of ethylene terephthalate, and a thermosetting resin may be applied on the film of the present invention and used as an adhesive layer. Specifically, the resin constituting an adhesive layer is preferably a polyester-based resin comprising 80 to 100% by mass of a polyester-based resin mainly consisting of ethylene terephthalate (hereinafter, refer to Resin B1), and 0 to 20% by mass of a polyester-based resin having a different composition from the polyester-based resin mainly consisting of ethylene terephthalate (hereinafter, refer to Resin B2). More preferably, the adhesive layer is a polyester-based resin obtained by mixing 85 to 95% by mass of Resin B1 with 5 to 15% by mass of Resin B2.

In Resin B1, the phrase "mainly consisting of ethylene terephthalate" refers that the ethylene terephthalate unit is not less than 80% by mol, in 100% by mol of the total constituent units of the polyester.

Resin B1 may contain a unit derived from a polyhydric alcohol other than ethylene glycol and/or a unit derived from a polycarboxylic acid other than terephthalic acid. The unit derived from a polyhydric alcohol other than ethylene glycol refers to an ester unit comprising a polyhydric alcohol other than ethylene glycol and terephthalic acid, and the unit derived from a polycarboxylic acid other than terephthalic acid means an ester unit comprising a polycarboxylic acid other than terephthalic acid and ethylene glycol.

Examples of the polycarboxylic acid other than terephthalic acid include aromatic polycarboxylic acids such as isophthalic acid, phthalic acid, naphthalenedicarboxylic acid and biphenyldicarboxylic acid; aliphatic dicarboxylic acids such as adipic acid, azelaic acid, sebacic acid, decanedicarboxylic acid, dodecanedicarboxylic acid and dimer acid; alicyclic polycarboxylic acids such as cyclohexanedicarboxylic acid; and the like.

Examples of the polyhydric alcohol other than ethylene glycol include aliphatic polyhydric alcohols such as diethylene glycol, triethylene glycol, propanediol, butanediol, pentanediol, hexanediol, dodecamethylene glycol and neopentyl glycol; alicyclic diols such as cyclohexane dimethanol and cyclohexane diethanol; aliphatic polyhydric alcohols such as trimethylolpropane and pentaerythritol; aromatic polyhydric alcohols such as ethylene oxide adducts of a bisphenol derivative; and the like.

Resin B1 is preferably not less than 0% by mol and not more than 20% by mol and preferably not less than 5% by mol and not more than 15% by mol of ethylene isophthalate units, in 100% by mol of the total constituent units of the polyester. Also, in Resin B1, it is preferred that the total constituent units of the polyester comprise ethylene terephthalate units and diethylene isophthalate units, and more specifically, Resin B1 comprises polyethylene terephthalate and polyethylene isophthalate.

In Resin B2, the phrase "having a different composition from the polyester-based resin mainly consisting of ethylene terephthalate" refers that the ethylene terephthalate unit is less than 20% by mol, in 100% by mol of the total constituent units of the polyester.

Resin B2 contains a unit derived from a polyhydric alcohol other than ethylene glycol and/or a unit derived from a polycarboxylic acid other than terephthalic acid. Specific examples of the polycarboxylic acid other than terephthalic acid and the polyhydric alcohol other than ethylene glycol are the same as those of Resin B1.

Resin B2 is preferably not less than 80% by mol and more preferably 100% by mol of butylene terephthalate (Resin B2 is polybutylene terephthalate), in 100% by mol of the total constituent units of the polyester.

Also, in the adhesive layer, various additives such as lubricant particles and antioxidant may be contained in a ratio of not more than 5% by mass, in 100% by mass of the composition containing a polyester-based resin.

By using the polyester-based resin as the resin constituting the adhesive layer, flowability of the adhesive layer does not increase much even when heating the film in the can making process and the like, and the dimensional change of the polyester-based film for laminating a metal plate is unlikely to be large. In addition, by using the polyester-based resin as the resin constituting the adhesive layer, the adhesive layer is likely to adhere to a metal plate by heat fusion.

The resin constituting the adhesive layer has a melting point of preferably 220 to 235°C, more preferably 225 to 235°C, and furthermore preferably 225 to 233°C. When the resin constituting the adhesive layer has a melting point of less than 220°C, the flowability of the adhesive layer increases due to heat history in the can making process and the like, and the dimensional change of the polyester-based film for laminating a metal plate may become larger. On the other hand, when the resin constituting the adhesive layer has a melting point exceeding 235°C, it approaches the melting point of the polyester-based film for laminating a metal plate. Therefore, when adhesion to the metal plate by heat fusion is secured, excessive heat may be given to the polyester-based film for laminating a metal plate.

As the method of providing an adhesive layer on the film of the present invention is not particularly limited, but it is preferred to laminate an adhesive layer by a co-extrusion method when preparing the film of the present invention.

The resin constituting the adhesive layer has an intrinsic viscosity of preferably 0.5 to 0.7 dl/g, and more preferably 0.55 to 0.65 dl/g. When the intrinsic viscosity is less than 0.5 dl/g, film-forming workability is very poor, and even when a film can be formed, a thermally degraded substance derived from a low molecular weight substance is generated, thus it is difficult to use it as a laminated film. Also, when the laminated film is used in contact with food and drink, it may be inferior in aroma retaining property, due to the influence of a low molecular weight substance in the adhesive layer. Also, when the intrinsic viscosity exceeds 0.7 dl/g, as a result of applying excessive heat and pressure when melting a resin and extruding the melted resin by an extruder, in a film forming process, a low molecular weight substance generated by being thermally decomposed in the extruder is increased, and extrusion load is too large. Therefore, it is difficult to extrude a uniform amount of resin from the extruder, and may be difficult to obtain a laminated film with good quality.

The temperature capable of laminating an adhesive layer and a metal plate is preferably not more than 200°C, more preferably not more than 180°C, and further preferably not more than 160°C. An adhesive layer and a metal plate are adhered each other at low temperature, whereby a film-laminated metal plate and a metal container can be produced at low cost. The method for measuring the temperature capable of laminating on the metal plate will be described later.

The film of the present invention (the polyester-based film for laminating a metal plate) has a thickness of preferably not less than 5 µm and not more than 25 µm, more preferably not less than 8 µm and not more than 20 µm, and further preferably not less than 10 µm and not more than 15 µm. When the film of the present invention is less than 5 µm, the film is inferior in gas barrier properties and deteriorated in corrosion resistance, and further, a low molecular weight substance from a metal container may permeate food and drink. On the other hand, even when the thickness of the film of the present invention exceeds 25 µm, corresponding improving effect is not obtained, and it becomes disadvantage in terms of manufacturing cost.

The total thickness of the laminated film (the total thickness of the polyester-based film for laminating a metal plate and the adhesive layer) is usually preferably not less than 8 µm and not more than 30 µm, more preferably not less than 10 µm and not more than 20 µm, and further preferably not less than 10 µm and not more than 15 µm.

Also, as the thickness ratio of the polyester-based film for laminating a metal plate to the adhesive layer, polyester-based film for laminating a metal plate : adhesive layer is preferably 75 : 25 to 95 : 5, and more preferably 85 : 15 to 90 : 10. When the thickness ratio of each layer is in the above range, adhesion, heat resistance and the like required when laminating the adhesive layer on the metal plate, and molding and processing the laminate are good. When the thickness ratio of the polyester-based film for laminating a metal plate exceeds 95%, more specifically, the thickness ratio of the adhesive layer is less than 5%, adhesion between the metal plate and the adhesive layer may not be sufficiently secured. Also, when the thickness ratio of the polyester-based film for laminating a metal plate is less than 75%, more specifically, the thickness ratio of the adhesive layer exceeds 25%, aroma retaining property may not be sufficiently secured.

The difference in glass transition temperature (Tg) between a resin constituting the polyester-based film for laminating a metal plate and a resin constituting the adhesive layer (Tg of a resin constituting the polyester-based film for laminating a metal plate - Tg of a resin constituting the adhesive layer) is preferably not more than 10°C, and more preferably not more than 6°C. When the difference in Tg exceeds 10°C, it is not preferred since the produced laminated film is likely to curl, and handleability is deteriorated.

### (Method for Producing Polyester-based film for Laminating Metal Plate and Laminated Film)

As the method for producing the film of the present invention, a raw material chip of each polyester to be used is dried using a dryer such as a hopper dryer or a paddle dryer, or a vacuum dryer, so that the residual moisture content is not more than 150 ppm, and extruded into a film shape at a temperature of 270 to 300°C using an extruder. When a raw material chip with a residual moisture content exceeding 150 ppm, the viscosity of the film to be obtained is lowered, and a trouble such as breakage during production may occur. Also, the strength of the film is reduced, and a trouble such as film breakage when the film is laminated on a metal plate may occur. As the production method other than the above methods, there is a method of extruding an undried polyester raw material chip into a film shape at a temperature of 270 to 300°C while removing moisture in a vented extruder. For extrusion, any known method such as a T-die method or a tubular method may be adopted. After extrusion, the film is quenched to obtain an unstretched film.

A method of stretching the film of the present invention is not particularly limited, and is preferably a biaxially stretched film. A polyester-based film is biaxially stretched, whereby aroma retaining property of the polyester-based film can be further improved. In biaxially stretching, either of sequentially biaxially stretching method and simultaneously biaxially stretching method may be used, but it is preferred to use a sequentially biaxially stretching method since the range of producible thickness is wide. In this case, the stretch ratio in the vertical direction is preferably 2 to 5 times and more preferably 2.5 to 4 times, and the stretch temperature is preferably 80 to 120°C and more preferably 90 to 110°C. The stretch ratio in the horizontal direction is preferably 2 to 5 times and more preferably 3 to 4.5 times, and the stretch temperature is preferably 80 to 120°C and more preferably 90 to 110°C.

When obtaining the laminated film, the laminated film may be prepared by a method of laminating a polyester-based film for laminating a metal plate and an adhesive layer by co-extrusion and then biaxially stretching the laminate, or may be prepared by a method of separately preparing a polyester-based film for laminating a metal plate and an adhesive layer and then laminating them. An adhesive layer can be prepared by the same production method and stretch method as those of the polyester-based film for laminating a metal plate.

When forming a laminated film, a residual shrinkage stress by biaxially stretching of a polyester-based film for laminating a metal plate is preferably reduced or eliminated by a heat fixing method or the like. It is because the dimensional change of the laminated film due to heat history in the can making process and the like can be reduced thereby. Also, when a residual shrinkage stress is reduced or eliminated by heat fixing a polyester-based film for laminating a metal plate or the like, the adhesive layer is preferably converted to indeterminate or made to be unoriented by heat history thereof or the like. Whereby, when a laminated film is laminated on a preheated metal plate, sufficient laminate adhesive force can be obtained even without preheating the metal plate until it reaches the melting point of the adhesive layer, and a laminate process can be speeded up. In order to reduce or eliminate a residual shrinkage stress by biaxially stretching of a polyester-based film for laminating a metal plate and amorphize or remove orientation of the adhesive layer, the film is heat fixed preferably in the temperature conditions of not less than a temperature lower than the melting point of the polyester constituting the adhesive layer by 5°C, and not more than a temperature lower than the melting point of the polyester constituting the polyester-based film for laminating a metal plate by 15°C, and more preferably in the temperature conditions of not less than a temperature lower than the melting point of the polyester constituting the adhesive layer by 2°C, and not more than a temperature lower than the melting point of the polyester constituting the polyester-based film for laminating a metal plate by 20°C. The residual shrinkage stress of the polyester-based film for laminating a metal plate is reduced or eliminated, and the adhesive layer is converted to indeterminate or made to be unoriented, whereby an impact strength, including so-called securing of laminate workability or handleability, can be achieved.

Also, in the case of a laminated film, the melting point of the polyester-based film for laminating a metal plate and the adhesive layer is preferably a temperature at which the preferred heat fixing temperature is selectable. The melting point of the polyester-based film for laminating a metal plate means a melting point in which the crystal melting peak area measured by DSC is largest when there is a plurality of polyester-based resins that constitute the layer, and the melting point of the adhesive layer means a melting point in which the crystal melting peak area measured by DSC is largest when there is a plurality of polyester-based resins that constitute the layer.

### (Laminate Metal Plate)

The film-laminated metal plate of the present invention can be obtained by laminating the laminated film on at least one surface of a metal plate, and is excellent in can-making processability.

The metal plate used for the film-laminated metal plate is not particularly limited, but examples thereof include tin plate, tin-free steel, aluminum, and the like. Also, the thickness thereof is not particularly limited, but is preferably 100 to 500 µm and more preferably 150 to 400 µm, in terms of economic efficiency represented by cost of material, can-making processing speed and the like, on the other hand, securing material strength.

In addition, as a method for laminating the laminated film on at least one surface of a metal plate, a known method can be applied, and the method is not particularly limited, but examples preferably include a thermal laminate method and particularly preferably include a method of electrically heating a metal plate to be thermally laminated. Also, the laminated film may be laminated on both surfaces of the metal plate. When the laminated film is laminated on both surfaces of the metal plate, the laminated film may be simultaneously laminated or sequentially laminated.

Moreover, when the laminated film is laminated on at least one surface of the metal plate, the adhesive layer is used as a layer to be laminated on the metal plate side, as described above. In this case, in order to provide superior barrier properties and superior corrosion resistance of the adhesive layer, and further improve adhesion to the laminate, the adhesive layer may be previously coated with a known adhesive containing a thermosetting resin as a main component, before laminating the film.

The metal container of the present invention can be obtained by molding using the film-laminated metal plate. The shape of the metal container is not particularly limited, but for example, the metal container can be formed into a can shape, a bottle shape, a barrel shape or the like. Also, the method for molding a metal container is not particularly limited, but for example, a known method such as drawing forming method, ironing forming method or drawing and ironing forming method can be used.

### EXAMPLES

The present invention will be described below more specifically with reference to examples, but the present invention is not limited to the following examples. The present invention can be put into practice after appropriate modifications or variations within a range meeting the gist described above and below, all of which are included in the technical scope of the present invention.

The evaluation methods and physical property measuring methods of the sample material obtained in each example and comparative example are as described below.

### (1) Method for Measuring Average Particle Size (Diameter) of Fine Particles

### (1-1) Method for measuring average particle size (diameter) of silica particles and polymethylmethacrylate particles

The average particle diameter of inorganic fine particles was measured using a particle size distribution meter (SZ-100, manufactured by HORIBA, Ltd.).

### (1-2) Method for measuring average particle size (diameter) of calcium carbonate particles

A film was dissolved in hexafluoroisopropanol to separate inorganic fine particles, and the resulting 30 particles were observed under a scanning electron microscope (S-3100 manufactured by Hitachi, Ltd.). For each particle, the diameter of the area equivalent circle was measured as a particle diameter, and the average value thereof was used as an average particle diameter.

### (2) Method for Measuring Melting Point

The melting point was measured using differential scanning calorimeter model DSC-60 manufactured by SHIMADZU CORPORATION. Polyesters used in Examples 1 to 3 and Comparative Examples 1 to 5 as raw materials (hereinafter, referred to as raw material polyesters) were heated and melted at 300°C for 5 minutes, and then quenched with liquid nitrogen. Using 10 mg of the quenched polyesters as a sample, an endothermic peak temperature (melting point) based on crystal fusion appeared when the temperature was raised at a rate of 20°C/min was measured. The melting point of the film was also measured in the same manner as the melting point of the raw material polyester, except for using samples scraped off from the polyester-based film for laminating a metal plate (hereinafter, may be referred to as layer A) and an adhesive layer (hereinafter, may be referred to as layer B) in place of the raw material polyester.

### (3) Method for Measuring Glass Transition Temperature

The glass transition temperature was measured using a differential scanning calorimeter (model DSC-60) manufactured by SHIMADZU CORPORATION. A raw material polyester was heated and melted at 300°C for 5 minutes, and then quenched with liquid nitrogen. Using 10 mg of the quenched polyesters as a sample, the temperature was raised at a rate of 20°C/min, a glass transition temperature (Tg) was measured from the DSC chart, according to a testing method for glass transition temperatures of plastics described in JIS K 7121. The glass transition temperature of the film was also measured in the same manner as the glass transition temperature of the raw material polyester, except for using samples scraped off from the layer A and the layer B in place of the raw material polyester.

### (4) Composition Analysis of Polyester-based resin

A sample solution was prepared by dissolving about 30 mg of a sample in a solvent mixture of chloroform D (manufactured by Yurisoppu Co., Ltd.) and trifluoroacetic acid D1 (manufactured by Yurisoppu Co., Ltd.) at 10:1 (volume ratio). Then, using a nuclear magnetic resonance (NMR) apparatus (GEMINI-200 manufactured by Varian), NMR of protons in the sample solution was measured under the conditions of a temperature of 23°C and a number of integrations of 64. In the NMR measurement, a prescribed peak intensity of protons was calculated, and the contents (% by mol) of the terephthalic acid component and the isophthalic acid component in 100% by mol of the acid components were calculated.

### (5) Method for Measuring Intrinsic Viscosity

A raw material polyester was dissolved in a mixed solvent of phenol (60% by mass) and 1,1,2,2-tetrachloroethane (40% by mass) so as to have a concentration of 0.4 g/dl, and the intrinsic viscosity was measured at a temperature of 30°C using an Ubbelohde's viscometer. The unit of intrinsic viscosity is dl/g.

### (6) Method for Measuring Moisture Content

A raw material polyester immediately after terminating the drying process was sampled in a container, and the container was sealed until moisture content measurement. About 2 g of this raw material polyester was weighted, and the moisture content was measured at a vaporization temperature of 230°C, using a Karl Fischer moisture meter, a moisture measuring device manufactured by Mitsubishi Chemical Analytech Co., Ltd.

### (7) Physical Properties of Film and Laminated Film

### (7-1) Method for measuring haze

A haze was measured using a haze meter (300A manufactured by NIPPON DENSHOKU INDUSTRIES CO., LTD.) according to JIS-K-7136. The measurement was performed twice, and the average value thereof was obtained.

### (7-2) Method for measuring content of ethylene terephthalate cyclic trimer

100 mg of a film was precisely weighed, and a sample was dissolved in 3 ml of a hexafluoroisopropanol/chloroform mixed liquid (volume ratio = 2/3). Then, 20 ml of chloroform was further added thereto to dilute the solution. A polymer was precipitated by adding 10 ml of methanol thereto, then filtered, and the filtrate was evaporated to dryness. The amount of the evaporated dried solid was measured. Moreover, a solution obtained by centrifuging a solution of the evaporated dried solid dissolved in 10 ml of N,N-dimethylformamide was analyzed using LC 100 manufactured by Hewlett Packard Company that is HPLC (high-performance liquid chromatography). The major analysis conditions are shown below. Column: µBondasphere/Delta-Pak C₁₈ 5 µm 100 Å 3.9 mm × 15 cm manufactured by Waters Corporation
Column temperature: 50°C
Mobile phase A: 2% acetic acid/water (volume ratio)
Mobile phase B: acetonitrile
Elution method: mobile phase A/mobile phase B (volume ratio) = linear gradient elution method from 10/90 (0 min) to 100/0 (55 min) Flow rate: 0.8 ml/min
Detection wavelength: UV 258 nm

### (7-3) Method for measuring temperature capable of film laminating on metal plate

A degreased metal plate with a thickness of 190 µm (tin free steel, L type bright finish, surface roughness of 0.3 to 0.5 µm, manufactured by NIPPON STEEL & SUMITOMO METAL CORPORATION) was preheated to 150°C, and the metal plate was placed on the surface of the adhesive layer of the laminated film. The laminated product was passed in between rubber rolls pressurized at 500 N/cm, at a speed of 10 m/minute, and quickly cooled with water to give a film-laminated metal plate [thickness of 202 µm (laminated film/metal plate =12 µm/190 µm)].

The center part of the film surface side of the obtained film-laminated metal plate was cut into 15 mm width horizontally in relation to the film laminate advancing direction with a razor. A 15 mm width part of the laminated film was gradually cut from the film-laminated plate while applying water, and peeled about 5 cm in the longitudinal direction. The resulting sample was set in a Tensilon STM-T-50 manufactured by BALDWIN JAPAN LTD so that the angle between the end portion of the peeled laminated film and the film-laminated metal plate was 180°, and the 180° peel strength was measured at a tensile speed of 200 mm/min.

Thereafter, the preheating temperature was raised from 150°C by 10°C, and the peel strength was measured in the same manner as above. The temperature at which the peel strength was not less than 0.10 N/15 mm was defined as a temperature capable of film laminating on a metal plate.

### (7-4) Method for measuring thickness of each layer of laminated film

An ultrathin cross-sectional slice of the laminated film was observed using a transmission electron microscope (model HU-12) manufactured by Hitachi, Ltd., and the thickness (µm) of each layer of the laminated film was measured.

### (8) Film Laminate Metal Plate

### (8-1) Oligomer precipitation on film surface

The film-laminated metal plate obtained as in the above-mentioned (7-3) was cut into a 100 mm × 100 mm square to give a sample, wherein the sides were in parallel relation to the vertical stretching direction of the film (in the case of the biaxially stretched film), the stretching direction of the film (in the case of the uniaxially stretched film), or the film-forming direction (in the case of the unstretched film). This sample was subsequently subjected to a retorting treatment at 120°C for 30 minutes with 500 cc of distilled water. The film-laminated metal plate after the retorting treatment was air dried, the condition of the film surface was observed using a loupe with a scale with 10-fold magnification (SCALE LUPE ×10 manufactured by Tohkai Sangyo Co., Ltd), and the presence or absence of precipitation of an oligomer was determined based on the criteria shown below. The preheating temperature of the metal plate during the preparation of the film-laminated metal plate was set to the temperature capable of film laminating on a metal plate measured in the above-mentioned (7-3).
A: Oligomer crystal is not found on film surface
B: Oligomer crystal is found on film surface

### (8-2) Method for measuring dynamic friction coefficient

The film-laminated metal plate obtained in the above-mentioned (7-3) was cut into a 150 mm × 100 mm rectangle to give a sample, wherein the longer sides were in parallel relation to the vertical stretching direction of the film (in the case of the biaxially stretched film), the stretching direction of the film (in the case of the uniaxially stretched film), or the film-forming direction (in the case of the unstretched film). Subsequently, the sample was set to a sliding member with a mass of 1.5 kg having a contact area of 50 mm × 70 mm with the sample on the surface so that the vertical stretching direction of the film (in the case of the biaxially stretched film), the stretching direction of the film (in the case of the uniaxially stretched film), or the film-forming direction (in the case of the unstretched film) was in parallel with the sliding direction, and a dynamic friction coefficient when the sliding member was slid on a tin free steel plate at 80°C at a rate of 250 mm/min was measured. The preheating temperature of the metal plate during the preparation of the film-laminated metal plate was set to the temperature capable of film laminating on a metal plate measured in the above-mentioned (7-3).

### (8-3) Rubber roll stain

After preparing the film-laminated metal plate as in the above-mentioned (7-3), whether or not a foreign matter adhered to the rubber roll was visually confirmed.
A: Stain cannot be confirmed
B: Stains are partially adhered
C: Stains are entirely adhered

### (8-4) High-speed can making properties

The film-laminated metal plate obtained as in the above-mentioned (7-3) was used in a bottom lid, a can body and an upper lid, to make a can as a 3-piece can for 185 g. After making a can, it was observed for the presence or absence of a scratch on the surface of the film.
A: Scratch cannot be confirmed
B: Small scratch is seen
C: Scratch is seen

### (8-5) Fall of fine particles

With a Gakushin type rubbing color fastness friction tester manufactured by TOYO SEIKI Co., Ltd., a friction element with a load of 400 g to which an aluminum foil with a thickness of 0.05 mm was set was subjected to friction treatment on a film at 20 to 40°C in the conditions of 30 reciprocations/min in a reciprocation distance of 100 mm for 1 minute, then a stain on the film surface was observed under a scanning electron microscope (model S-510 manufactured by Hitachi, Ltd.), and evaluated according to the following criteria. The film evaluated with B or better is practical.
A: Fall of fine particles is scarcely observed
B: Fall of fine particles is partially observed
C: Fall of fine particles is entirely observed

### (9) Metal Container after Can Making

### (9-1) Peeling of repairing tape at repairing

Repairing of a joint part of the metal container (3-piece can) obtained as in the above-mentioned (8-4) was performed using an epoxy resin repairing tape. Appearance of the epoxy resin repairing tape in the joint repairing part was visually observed.
A: No change in appearance
B: Floating of the repairing tape is observed
C: Peeling of the repairing tape is observed

### (9-2) Method for measuring corrosion resistance

A 3-piece can for 185 ml was made using the film-laminated metal plate obtained as in the above-mentioned (7-3), so that the film laminated surface faces inward, and the resulting 3-piece can was filled with carbonated water containing 5% by mass of sodium chloride (carbon dioxide gas concentration of 1000 ppm) as a content, and subjected to a retorting treatment at 140°C for 10 minutes, then stored at 80°C for 2 weeks. Thereafter, the carbonated water filled in the 3-piece can was drained, and the can was opened by cutting, and washed with water. Then, the film laminated surface was observed, and corrosion resistance was determined based on the criteria shown below.
A: Discoloration of film surface is not observed
B: Discoloration of film surface is observed

### (9-3) Aroma retaining property

A 3-piece can for 185 ml was made using the film-laminated metal plate obtained as in the above-mentioned (7-3), so that the film laminated surface faces inward, and the resulting 3-piece can was filled with coffee, and then subjected to a retorting treatment at 125°C, then stored at 80°C for 2 weeks. Finally, the coffee filled in the 3-piece can was drained, and change in taste and odor was determined by sense of smell.
A: No change in taste and odor
B: Taste and odor are slightly weak
C: Taste and odor are weak

### (Example 1)

### (Production of Polyester-based film for Laminating Metal Plate)

As the resin for the polyester-based film for laminating a metal plate, a mixture of the following three kinds of Resins C to E was used. Resin C: 50 Parts by mass of a PET resin (SU554A manufactured by TOYOBO CO., LTD.) added with aggregation type silica particles with an average particle diameter of 2.7 µm (hereinafter, referred to as aggregated silica particles) (Sylysia 310, manufactured by Fuji Silysia Chemical Ltd.) Resin D: 30 Parts by mass of a copolymerized polyester-based resin obtained by adding the aggregated silica particles to a copolymer of terephthalic acid polymerized with a Ge catalyst (hereinafter, referred to as TPA)/isophthalic acid (hereinafter, referred to as IPA) (molar ratio of 90/10) and ethylene glycol (RF230 manufactured by TOYOBO CO., LTD.)
Resin E: 20 Parts by mass of a PET resin obtained by further melt-kneading the aggregated silica particles and calcium particles with an average particle diameter of 1.0 µm with Resin C
Resin C was a PET resin having an intrinsic viscosity of 0.67 dl/g, a melting point of 254°C, a glass transition temperature of 76°C, and an ethylene terephthalate cyclic trimer content of 0.33% by mass, and the aggregated silica particles were 0.2 parts by mass in 100 parts by mass of the resin. Herein, Resin C was subjected to solid phase polymerization to reduce the ethylene terephthalate cyclic trimer content.

Resin D was a copolymerized polyester-based resin having an intrinsic viscosity of 0.63 dl/g, a melting point of 233°C, and a glass transition temperature of 70°C, and the aggregated silica particles were 0.17 parts by mass in 100 parts by mass of the resin.

Resin E had an intrinsic viscosity of 0.60 dl/g, and the aggregated silica particles were 1.0 part by mass and indeterminate calcium carbonate particles (Caltex 5 manufactured by MARUO CALCIUM CO., LTD.) were 5.0 parts by mass in 100 parts by mass of the resin.

As the resin for the adhesive layer, a mixture of the following two kinds of Resins J and K was used. This mixture had an intrinsic viscosity of 0.60 dl/g, a melting point of 227°C, and a glass transition temperature of 67°C.
Resin J: 90 Parts by mass of a copolymerized polyester-based resin (RF230 manufactured by TOYOBO CO., LTD.)
Resin K: 10 Parts by mass of a PBT resin (NOVADURAN (registered trademark) 5007A manufactured by Mitsubishi Engineering-Plastics Corporation)
Resin J was a copolymerized polyester-based resin of TPA/IPA polymerized with a Ge catalyst (molar ratio of 90/10) and ethylene glycol, and had an intrinsic viscosity of 0.63 dl/g, a melting point of 233°C, and a glass transition temperature of 70°C. Also, Resin K was a PBT resin polymerized with a Ti catalyst, and had an intrinsic viscosity of 0.70 dl/g, a melting point of 222°C, and a glass transition temperature of 30°C.

The polyester for layer A was dried with a paddle dryer. The moisture content after drying was 48 ppm. Next, the dried polyester was melted using a uniaxial extruder at a resin temperature of 275°C for a residence time of 15 minutes while being fed by a constant screw feeder. The polyester for layer B was fed to separate hoppers, and the polyester was mixed in the hoppers while being continuously separately fed to a funnel-shaped hopper just above the extruder by a constant screw feeder so as to be the described ratio, and the undried polyester was melted at a resin temperature of 280°C for a residence time of 15 minutes while moisture was removed in a vented extruder. This melted body was joined in a die, then extruded on a cooling drum, and formed into an indeterminate sheet. Thereafter, the indeterminate sheet was stretched 3.5 times in the vertical direction at 110°C, stretched 4.1 times in the horizontal direction at 130°C, and heat fixed at 230°C, to prepare a laminated film with layer A thickness of 10.5 µm and layer B thickness of 1.5 µm (total thickness of 12 µm), namely, thickness ratio of each layer, layer A : layer B = 87.5 : 12.5. Breakage did not occur during laminated film production.

The haze and the content of an ethylene terephthalate cyclic trimer in layer A of the resulting laminated film were measured to be 41% and 0.41% by mass, respectively. The temperature capable of laminating on metal was measured to be 160°C.

### (Production of Film-Laminated Metal Plate)

A degreased metal plate with a thickness of 190 µm (tin free steel, L type bright finish, surface roughness of 0.3 to 0.5 µm, manufactured by NIPPON STEEL & SUMITOMO METAL CORPORATION) was preheated to the temperature capable of film laminating on a metal plate measured in the above-mentioned (7-3), and the metal plate was placed on the surface of layer B of the laminated film. The laminated product was passed in between rubber rolls pressurized at 500 N/cm, at a speed of 10 m/minute, and quickly cooled with water to give a film-laminated metal plate [thickness of 202 µm (laminated film/metal plate = 12 pm/190 µm)]. At that time, handleability was good, without causing a problem such as breakage of the laminated film and the like. Also, a block copolymer in the film did not adhere on the rubber roll, and high-speed can making properties were also good. In addition, fall of particles was not also observed. The dynamic friction coefficient of the surface of layer A of the laminated film at 80°C was 0.39.

### (Production of Metal Container)

The resulting film-laminated metal plate was used in the inner and outer surfaces of a bottom lid and the inner surface of a can body to make a can as a 3-piece can for 185 g. Problems such as surface exposure of the metal plate and peeling of repairing tape did not occur. Also, corrosion resistance and aroma retaining property were good.

In the resulting laminated film, raw materials used in layer A and layer B are shown in Table 1. The "content of inorganic fine particles" described in Table 1 is a total content of the aggregated silica particles and the calcium carbonate particles in 100 parts by mass of the resin, and the same applies to the following examples and comparative examples. Also, physical properties of the resulting laminated film and evaluation results of a film-laminated metal plate obtained by molding the laminated film and a metal container obtained by molding the film-laminated metal plate are shown in Table 2.

### (Example 2)

A laminated film was prepared in the same manner as in Example 1, except for using a mixture of 40 parts by mass of Resin C, 24 parts by mass of Resin D and 16 parts by mass of Resin E, and 20 parts by mass of recycled raw materials of the laminated film obtained in Example 1 (hereinafter, referred to as Resin F) (containing 10 parts by mass of Resin C, 6 parts by mass of Resin D and 4 parts by mass of Resin E) when preparing layer A, and using 100 parts by mass of Resin J as the resin for layer B, in Example 1.

Resin F had an intrinsic viscosity of 0.59 dl/g, a melting point of 248°C, a glass transition temperature of 72°C, an ethylene terephthalate cyclic trimer content of 0.35% by mass, and a content of a unit other than ethylene terephthalate units and diethylene terephthalate units of 3.75% by mol.

Each polyester for layer A was dried with a separate paddle dryer. The moisture contents of dried polyethylene terephthalate and the recycled raw materials of the film were 44 ppm and 35 ppm, respectively. While these dried polyesters were continuously separately fed to a funnel-shaped hopper just above the extruder by a constant screw feeder so as to be the predetermined ratio, the polyester was mixed in this hopper, and melted using a uniaxial extruder at a resin temperature of 280°C for a residence time of 16.5 minutes. The polyester for layer B was melted in the same manner as in Example 1. These melted bodies were joined in a die, then extruded on a cooling drum, and formed into an indeterminate sheet. Thereafter, the indeterminate sheet was stretched 3.5 times in the vertical direction at 110°C, stretched 4.1 times in the horizontal direction at 130°C, and heat fixed at 233°C, to prepare a laminated film with layer A thickness of 10 µm and layer B thickness of 2 µm (total thickness of 12 µm), namely, thickness ratio of each layer, layer A : layer B = 83.3 : 16.7. Breakage did not occur during laminated film production.

The haze and the content of an ethylene terephthalate cyclic trimer in layer A of the resulting laminated film were measured to be 38% and 0.44% by mass, respectively. The temperature capable of laminating on metal was measured to be 160°C.

### (Production of Film-Laminated Metal Plate)

A film-laminated metal plate was obtained in the same manner as in Example 1. At that time, handleability was good, without causing a problem such as breakage of the film and the like. Also, a block copolymer in the film did not adhere on the rubber roll, and high-speed can making properties were also good. In addition, fall of particles was not also observed. The dynamic friction coefficient of the surface of the film-laminated metal plate at 80°C was 0.40.

### (Production of Metal Container)

A can was formed as a 3-piece can for 185 g in the same manner as in Example 1. Problems such as surface exposure of the metal plate and peeling of repairing tape did not occur. Also, corrosion resistance and aroma retaining property were good.

In the resulting laminated film, raw materials used in layer A and layer B are shown in Table 1. Also, physical properties of the resulting laminated film and evaluation results of a film-laminated metal plate obtained by molding the laminated film and a metal container obtained by molding the film-laminated metal plate are shown in Table 2.

### (Example 3)

A laminated film was prepared in the same manner as in Example 1, except for using 100 parts by mass of Resin J, without using Resin K, when preparing layer B, in Example 1. Breakage did not occur during film production.

The haze and the content of an ethylene terephthalate cyclic trimer in layer A of the resulting laminated film were measured to be 41% and 0.41% by mass, respectively. The temperature capable of laminating on metal was measured to be 160°C.

### (Production of Film-Laminated Metal Plate)

A film-laminated metal plate was obtained in the same manner as in Example 1. At that time, handleability was good, without causing a problem such as breakage of the film and the like. Also, a block copolymer in the film did not adhere on the rubber roll, and high-speed can making properties were also good. In addition, fall of particles was not also observed. The dynamic friction coefficient of the surface of the film-laminated metal plate at 80°C was 0.39.

### (Production of Metal Container)

A can was formed as a 3-piece can for 185 g in the same manner as in Example 1. Problems such as surface exposure of the metal plate and peeling of repairing tape did not occur. Also, corrosion resistance and aroma retaining property were good.

In the resulting laminated film, raw materials used in layer A and layer B are shown in Table 1. Also, physical properties of the resulting laminated film and evaluation results of a film-laminated metal plate obtained by molding the laminated film and a metal container obtained by molding the film-laminated metal plate are shown in Table 2.

### (Example 4)

A laminated film was prepared in the same manner as in Example 1, except for using 20 parts by mass of Resin L described later, without using Resin E, when preparing layer A, and using 100 parts by mass of Resin J, without using Resin K, when preparing layer B, in Example 1. Breakage did not occur during film production.

Resin L: 20 Parts by mass of a PET resin obtained by further melt-kneading the aggregated silica particles and calcium particles with an average particle diameter of 1.0 µm with Resin C

Resin L had an intrinsic viscosity of 0.60 dl/g, and the aggregated silica particles were 1.35 parts by mass and indeterminate calcium carbonate particles (Caltex 5 manufactured by MARUO CALCIUM CO., LTD.) were 5.0 parts by mass in 100 parts by mass of the resin.

The haze and the content of an ethylene terephthalate cyclic trimer in layer A of the resulting laminated film were measured to be 43% and 0.41% by mass, respectively. The temperature capable of laminating on metal was measured to be 160°C.

### (Production of Film-Laminated Metal Plate)

A film-laminated metal plate was obtained in the same manner as in Example 1. At that time, handleability was good, without causing a problem such as breakage of the film and the like. Also, a block copolymer in the film did not adhere on the rubber roll, and high-speed can making properties were also good. In addition, fall of particles was not also observed. The dynamic friction coefficient of the surface of the film-laminated metal plate at 80°C was 0.36.

### (Production of Metal Container)

A can was formed as a 3-piece can for 185 g in the same manner as in Example 1. Problems such as surface exposure of the metal plate and peeling of repairing tape did not occur. Also, corrosion resistance and aroma retaining property were good.

In the resulting laminated film, raw materials used in layer A and layer B are shown in Table 1. Also, physical properties of the resulting laminated film and evaluation results of a film-laminated metal plate obtained by molding the laminated film and a metal container obtained by molding the film-laminated metal plate are shown in Table 2.

### (Comparative Example 1)

A laminated film was prepared in the same manner as in Example 1, except for using a mixture of 76 parts by mass of Resin C, and 4 parts by mass of Resin G and 20 parts by mass of Resin H described below, in place of polyethylene terephthalate used in layer A, in Example 1. No breakage occurred during laminated film production.

Resin G: Into a reactor equipped with an inlet, a thermometer, a pressure gauge, a distillation tube with a rectifying column, and an impeller were charged 75 parts by mass of 1,4-butanediol, 75 parts by mass of polytetramethylene glycol (number average molecular weight of 1000) and 0.05 parts by mass of n-butyl titanate, based on 100 parts by mass of dimethyl terephthalate, and a transesterification reaction was carried out at 190°C to 230°C while distilling methanol to the outside of the system. After completion of the reaction, 0.05 parts by mass of tetra n-butyl titanate and 0.025 parts by mass of phosphoric acid were added, and a polycondensation reaction was performed at 250°C under a reduced pressure (not more than 1.0 hPa) to give a polytetramethylene terephthalate-polytetramethylene oxide block copolymer. The resulting polytetramethylene terephthalate-polytetramethylene oxide block copolymer contained a ratio of polytetramethylene oxide of 40% by mass and had an intrinsic viscosity of 1.90 dl/g.

Resin H: A PET resin obtained by further adding the aggregated silica particles and spherical polymethylmethacrylate particles (average particle diameter of 2.0 µm, refractive index of 1.51) to Resin C
In Resin H, the aggregated silica particles were 0.7 parts by mass, and the spherical polymethylmethacrylate particles was 1.0 part by mass, in 100 parts by mass of the resin.

The haze of the resulting laminated film and the content of an ethylene terephthalate cyclic trimer in layer A were measured to be 55% and 0.39% by mass, respectively. The temperature capable of laminating on metal was measured to be 160°C.

### (Production of Film-Laminated Metal Plate)

A film-laminated metal plate was obtained in the same manner as in Example 1. At that time, while handleability was good, without causing a problem such as breakage of the film and the like, a problem that a block copolymer adhered to the rubber roll was seen. In addition, fall of particles was observed. The dynamic friction coefficient of the surface of the film-laminated metal plate at 80°C was 0.35.

### (Production of Metal Container)

A can was formed as a 3-piece can for 185 g in the same manner as in Example 1. Problems such as surface exposure of the metal plate and peeling of repairing tape did not occur. Also, corrosion resistance and aroma retaining property were good.

In the resulting laminated film, raw materials used in layer A and layer B are shown in Table 1. Also, physical properties of the resulting laminated film and evaluation results of a film-laminated metal plate obtained by molding the laminated film and a metal container obtained by molding the film-laminated metal plate are shown in Table 2.

### (Comparative Example 2)

The same procedure was carried out as in Example 1, except for using 65 parts by mass of Resin C, 20 parts by mass of Resin H, and 15 parts by mass of NOVADURAN (registered trademark) 5020HF manufactured by Mitsubishi Engineering-Plastics Corporation (hereinafter, referred to as Resin I), a PBT resin, without using Resin D, when preparing layer A, in Example 1. Breakage did not occur during film production.

Also, Resin I was a PBT resin having an intrinsic viscosity of 1.20 dl/g, a melting point of 224°C, and a glass transition temperature of 30°C.

Each polyester for layer A was dried with a separate paddle dryer. The moisture contents of dried polyethylene terephthalate and the recycled raw materials of the film were 38 ppm and 39 ppm, respectively. These dried polyesters were continuously separately fed to a funnel-shaped hopper just above the extruder by a constant screw feeder so as to be the predetermined ratio, the polyester was mixed in this hopper, and melted using a uniaxial extruder at a resin temperature of 285°C for a residence time of 15.7 minutes. The polyester for layer B was melted in the same manner as in Example 1. These melted bodies were joined in a die, then extruded on a cooling drum, and formed into an indeterminate sheet. Thereafter, the indeterminate sheet was stretched 3.5 times in the vertical direction at 110°C, stretched 4.1 times in the horizontal direction at 130°C, and heat fixed at 230°C, to prepare a polyester-based film with layer A thickness of 10.5 µm and layer B thickness of 1.5 µm (total thickness of 12 µm), namely, thickness ratio of each layer, layer A : layer B = 87.5 : 12.5. Breakage did not occur during film production.

The haze of the resulting film and the content of an ethylene terephthalate cyclic trimer in the film were measured to be 50% and 0.49% by mass, respectively. The temperature capable of laminating on metal was measured to be 160°C.

### (Production of Film-Laminated Metal Plate)

A film-laminated metal plate was obtained in the same manner as in Example 1. At that time, handleability was good, without causing a problem such as breakage of the film and the like. Also, a block copolymer in the film did not adhere on the rubber roll, and high-speed can making properties were also good. However, fall of particles was observed. The dynamic friction coefficient of the surface of the film-laminated metal plate at 80°C was 0.39.

### (Production of Metal Container)

A can was formed as a 3-piece can for 185 g in the same manner as in Example 1. Problems such as surface exposure of the metal plate and peeling of repairing tape did not occur. However, when corrosion resistance evaluation was performed, discoloration occurred in the film surface, and was problematic. There was also a problem in aroma retaining property.

In the resulting polyester-based film, raw materials used in layer A and layer B are shown in Table 1. Also, physical properties of the resulting polyester-based film and evaluation results of a film-laminated metal plate obtained by molding the polyester-based film and a metal container obtained by molding the film-laminated metal plate are shown in Table 2.

### (Comparative Example 3)

A laminate film was prepared in the same manner as in Example 1, except for using 80 parts by mass of Resin C and 20 parts by mass of Resin H, without using Resin D, when preparing layer A, in Example 1. Breakage did not occur during film production.

The haze of the resulting film and the content of an ethylene terephthalate cyclic trimer in the film were measured to be 52% and 0.37% by mass, respectively. The temperature capable of laminating on metal was measured to be 160°C.

### (Production of Film-Laminated Metal Plate)

A film-laminated metal plate was obtained in the same manner as in Example 1. At that time, handleability was good, without causing a problem such as breakage of the film and the like. Also, a block copolymer in the film did not adhere on the rubber roll, and high-speed can making properties were also good. However, fall of particles was observed. The dynamic friction coefficient of the surface of the film-laminated metal plate at 80°C was 0.35.

### (Production of Metal Container)

A can was formed as a 3-piece can for 185 g in the same manner as in Example 1. When repairing a joint part of the metal container, peeling due to melting of layer B of the film and misalignment of the film due to shrinkage of layer A occurred, thus the joint part could not be repaired.

In the resulting polyester-based film, raw materials used in layer A and layer B are shown in Table 1. Also, physical properties of the resulting polyester-based film and evaluation results of film-laminated metal plate obtained by molding the polyester-based film are shown in Table 2.

### (Comparative Example 4)

A laminated film was prepared in the same manner as in Example 1, except for using 20 parts by mass of Resin H, without using Resin E, when preparing layer A, in Example 1.

The polyester for layer A was dried with a paddle dryer. The moisture content after drying was 48 ppm. Next, the dried polyester was melted using a uniaxial extruder at a resin temperature of 275°C for a residence time of 15 minutes while being fed by a constant screw feeder. The polyester for layer B was fed to separate hoppers, and the polyester was mixed in the hoppers while being continuously separately fed to a funnel-shaped hopper just above the extruder by a constant screw feeder so as to be the described ratio, and the undried polyester was melted at a resin temperature of 280°C for a residence time of 15 minutes while moisture was removed in a vented extruder. This melted body was joined in a die, then extruded on a cooling drum, and formed into an indeterminate sheet. Thereafter, the indeterminate sheet was stretched 3.5 times in the vertical direction at 110°C, stretched 4.1 times in the horizontal direction at 130°C, and heat fixed at 230°C, to prepare a polyester-based film with layer A thickness of 10.5 µm and layer B thickness of 1.5 µm (total thickness of 12 µm), namely, thickness ratio of each layer, layer A : layer B = 87.5 : 12.5. Breakage did not occur during film production.

The haze of the resulting film and the content of an ethylene terephthalate cyclic trimer in the film were measured to be 51% and 0.41% by mass, respectively. The temperature capable of laminating on metal was measured to be 160°C.

### (Production of Film-Laminated Metal Plate)

A film-laminated metal plate was obtained in the same manner as in Example 1. At that time, handleability was good, without causing a problem such as breakage of the film and the like. Also, a block copolymer in the film did not adhere on the rubber roll, and high-speed can making properties were also good. However, fall of particles was observed. The dynamic friction coefficient of the surface of the film-laminated metal plate at 80°C was 0.39.

### (Production of Metal Container)

A can was formed as a 3-piece can for 185 g in the same manner as in Example 1. Problems such as surface exposure of the metal plate and peeling of repairing tape did not occur. Also, corrosion resistance and aroma retaining property were good.

In the resulting polyester-based film, raw materials used in layer A and layer B are shown in Table 1. Also, physical properties of the resulting polyester-based film and evaluation results of a film-laminated metal plate obtained by molding the polyester-based film and a metal container obtained by molding the film-laminated metal plate are shown in Table 2.

### (Comparative Example 5)

A laminated film was prepared in the same manner as in Example 1, except for using 80 parts by mass of Resin D and 20 parts by mass of Resin E, without using Resin C, when preparing layer A, and using 100 parts by mass of Resin J, without using Resin K, when preparing layer B, in Example 1. Breakage did not occur during film production.

The polyester for layer A was dried with a paddle dryer. The moisture content after drying was 48 ppm. Next, the dried polyester was melted using a uniaxial extruder at a resin temperature of 275°C for a residence time of 15 minutes while being fed by a constant screw feeder. The polyester for layer B was fed to separate hoppers, and the polyester was mixed in the hoppers while being continuously separately fed to a funnel-shaped hopper just above the extruder by a constant screw feeder so as to be the described ratio, and the undried polyester was melted at a resin temperature of 280°C for a residence time of 15 minutes while moisture was removed in a vented extruder. This melted body was joined in a die, then extruded on a cooling drum, and formed into an indeterminate sheet. Thereafter, the indeterminate sheet was stretched 3.5 times in the vertical direction at 110°C, stretched 4.1 times in the horizontal direction at 130°C, and heat fixed at 230°C, to prepare a laminated film with layer A thickness of 10.5 µm and layer B thickness of 1.5 µm (total thickness of 12 µm), namely, thickness ratio of each layer, layer A : layer B = 87.5 : 12.5. Breakage did not occur during laminated film production.

The haze and the content of an ethylene terephthalate cyclic trimer in layer A of the resulting laminated film were measured to be 41% and 0.41% by mass, respectively. The temperature capable of laminating on metal was measured to be 160°C.

### (Production of Film-Laminated Metal Plate)

A film-laminated metal plate was obtained in the same manner as in Example 1. At that time, handleability was good, without causing a problem such as breakage of the film and the like. Also, a block copolymer in the film did not adhere on the rubber roll, and high-speed can making properties were also good. In addition, fall of particles was not also observed. The dynamic friction coefficient of the surface of the film-laminated metal plate at 80°C was 0.40.

### (Production of Metal Container)

A can was formed as a 3-piece can for 185 g in the same manner as in Example 1. Problems such as surface exposure of the metal plate and peeling of repairing tape did not occur. However, when corrosion resistance evaluation was performed, discoloration occurred in the film surface, and was problematic. There was also a problem in aroma retaining property.

In the resulting polyester-based film, raw materials used in layer A and layer B are shown in Table 1. Also, physical properties of the resulting polyester-based film and evaluation results of a film-laminated metal plate obtained by molding the polyester-based film and a metal container obtained by molding the film-laminated metal plate are shown in Table 2.

**Table. 1**

| | Resin for Layer A | | | | | | | | Resin for Layer B | |
|---|---|---|---|---|---|---|---|---|---|---|
| | Resin C | Resin D | Resin E | Resin L | Resin F | Resin G | Resin H | Resin I | Resin J | Resin K |
| Resin | PET | Polyester having TPA/IPA (molar ratio of 90/10) | PET | PET | Recycled film of Example 1 | Block Copolymer | PET | PET | Polyester having TPA/IPA (molar ratio of 90/10) | PBT |
| Intrinsic Viscosity (dl/g) | 0,67 | 0,63 | 0,60 | 0.60 | 0,59 | 1,90 | 0,60 | 1,20 | 0,63 | 0,70 |
| Indeterminate aggregated silica particle (part by mass) | 0,2 | 0,17 | 1,0 | 1.35 | | | 0,7 | | | |
| Indeterminate calcium carbonate particle (part by mass) | | | 5,0 | 5,0 | | | | | | |
| Spherical polymethylmethacrylate particle (part by mass) | | | | | | | 1,0 | | | |
| Example 1 | 50 | 30 | 20 | | | | | | 90 | 10 |
| Example 2 | 40 | 24 | 16 | | 20 | | | | 100 | |
| Example 3 | 50 | 30 | 20 | | | | | | 100 | |
| Example 4 | 50 | 30 | | 20 | | | | | 100 | |
| Comparative Example 1 | 76 | | | | | 4 | 20 | | 90 | 10 |
| Comparative Example 2 | 65 | | | | | | 20 | 15 | 90 | 10 |
| Comparative Example 3 | 80 | | | | | | 20 | | 90 | 10 |
| Comparative Example 4 | 50 | 30 | | | | | 20 | | 90 | 10 |
| Comparative Example 5 | | 80 | 20 | | | | | | 100 | |

**Table 2**

| | Film | | | | | | | | | | | Film-laminated Metal Plate | | | | | Metal Container | | |
|---|---|---|---|---|---|---|---|---|---|---|---|---|---|---|---|---|---|---|---|
| | Layer A | | | | | Layer B | | | Haze (%) | Cyclic Trimer (%) | Temperature Capable of Laminatin (°C) | Oligomer Precipitation | Dynamic Friction Coefficient of Surface (80°C) | Rubber Roll Stain | High-speed Can Making Property | Fall of Particles | Peeling of Repairing Tape | Corrosion Resistance | Aroma Retaining Property |
| | Content of Particles (part by mass) | Intrinsic Viscosity (dl/g) | Melting point (°C) | Tg (°C) | Content of ethylene isophthalate unit (% by mol) | Intrinsic Viscosity (dl/g) | Melting point (°C) | Tg (°C) | | | | | | | | | | | |
| Example 1 | 1,35 | 0,60 | 249 | 73 | 3 | 0,60 | 227 | 67 | 41 | 0,41 | 160 | A | 0,39 | A | A | A | A | A | A |
| Example 2 | 1,35 | 0,58 | 249 | 72 | 3 | 0,59 | 230 | 70 | 38 | 0,44 | 160 | A | 0,40 | A | A | A | A | A | A |
| Example 3 | 1,35 | 0,60 | 249 | 73 | 3 | 0,59 | 230 | 70 | 41 | 0,41 | 160 | A | 0,39 | A | A | A | A | A | A |
| Example 4 | 1,42 | 0,60 | 249 | 73 | 3 | 0,59 | 230 | 70 | 43 | 0,41 | 160 | A | 0,36 | A | A | A | A | A | A |
| Comparative Example 1 | 0,29 | 0,62 | 255 | 69 | 0 | 0,60 | 227 | 67 | 55 | 0,39 | 160 | A | 0,35 | C | A | C | A | A | A |
| Comparative Example 2 | 0,27 | 0,63 | 250 | 65 | 0 | 0,60 | 227 | 67 | 50 | 0,49 | 160 | A | 0,39 | A | A | C | A | B | C |
| Comparative Example 3 | 0,30 | 0,62 | 255 | 75 | 0 | 0,60 | 227 | 67 | 52 | 0,37 | 160 | A | 0,35 | A | A | C | C | - | - |
| Comparative Example 4 | 0,29 | 0,60 | 249 | 73 | 3 | 0,60 | 227 | 67 | 51 | 0,41 | 160 | A | 0,39 | A | A | C | A | A | A |
| Comparative Example 5 | 1,34 | 0,60 | 220 | 71 | 8 | 0,59 | 230 | 70 | 41 | 0,41 | 160 | A | 0,40 | A | A | A | A | B | C |

### INDUSTRIAL APPLICABILITY

The polyester-based film for laminating a metal plate of the present invention has excellent aroma retaining property and corrosion resistance, and can be adhered to a metal plate at a temperature lower than a conventional temperature. Also, when using the polyester-based film of the present invention, it is possible to make a can at a high speed, and the polyester-based film of the present invention is also suitable for repairing a joint part. Even when performing heat treatment for improvement in finishing properties of cans during can-making processing, performing heat treatment for repairing the joint part of a can, or the like, a repairing tape is not peeled off. Therefore, it is suitable to use the polyester-based film of the present invention as a film for a metal container for storing drink or food.

## Claims

1. A polyester-based film for laminating a metal plate formed from a composition containing a polyester-based resin mainly consisting of ethylene terephthalate, wherein
the polyester-based resin has a total content of ethylene terephthalate units and diethylene terephthalate units of not less than 95% by mol and not more than 98% by mol, and a content of a unit other than ethylene terephthalate units and diethylene terephthalate units of 2 to 5% by mol, in 100% by mol of the total constituent units of the polyester,
wherein the unit other than ethylene terephthalate and diethylene terephthalate units contains an ethylene isophthalate unit, and
the content of indeterminate inorganic fine particles is 0.5 to 2.0% by mass, in 100% by mass of the composition, and wherein the polyester-based resin has an intrinsic viscosity of 0.5 to 0.7 dl/g when measured according to the method described in the description.

2. The polyester-based film for laminating a metal plate according to claim 1, wherein the polyester-based resin comprises not less than 2% by mol and not more than 5% by mol of ethylene isophthalate units, in 100% by mol of the total constituent units of the polyester.

3. A laminated film for laminating a metal plate obtained by laminating an adhesive layer on the polyester-based film for laminating a metal plate according to claim 1 or 2.

4. The laminated film for laminating a metal plate according to claim 3, wherein the resin constituting the adhesive layer comprises 80 to 100% by mass of polyester-based resin (B1) mainly consisting of ethylene terephthalate, and 0 to 20% by mass of polyester-based resin (B2) having a different composition from the polyester-based resin (B1), and the polyester-based resin (B1) comprises not less than 5% by mol and not more than 15% by mol of ethylene isophthalate units, in 100% by mol of the total constituent units of the polyester.

5. The laminated film for laminating a metal plate according to claim 4, wherein the polyester-based resin (B1) comprises polyethylene terephthalate and polyethylene isophthalate.

6. The laminated film for laminating a metal plate according to claim 4 or 5, wherein the polyester-based resin (B2) is polybutylene terephthalate.

7. A film-laminated metal plate comprising a metal plate and the laminated film for laminating a metal plate according to any one of claims 3 to 6, obtained by laminating the adhesive layer on at least one surface of the metal plate.

8. A metal container obtained by molding the film-laminated metal plate according to claim 7.

## Patentansprüche

1. Ein auf Polyester basierender Film zum Laminieren einer Metallplatte, der aus einer Zusammensetzung enthaltend ein auf Polyester basierendes Harz, das im Wesentlichen aus Ethylenterephthalat besteht, gebildet ist, wobei
das auf Polyester basierende Harz einen Gesamtgehalt an Ethylenterephthalateinheiten und Diethylenterephthalateinheiten von nicht weniger als 95 Mol-% und nicht mehr als 98 Mol-% aufweist, und ein Gehalt einer von Ethylenterephthalateinheiten und Diethylenterephthalateinheiten verschiedenen Einheit von 2 bis 5 Mol-%, bezogen auf 100 Mol-% der Gesamtheit der Wiederholungseinheiten des Polyesters, beträgt,
wobei die von Ethylenterephthalat- und Diethylenterephthalateinheiten verschiedene Einheit eine Ethylenisophthalateinheit enthält, und
der Gehalt an unbestimmten anorganischen feinen Teilchen 0,5 bis 2,0 Massen-% beträgt, bezogen auf 100 Massen-% der Zusammensetzung, und wobei das auf Polyester basierende Harz eine Grenzviskosität von 0,5 bis 0,7 dl/g aufweist, wenn sie gemäß dem in der Beschreibung angegebenen Verfahren gemessen wird.

2. Der auf Polyester basierende Film zum Laminieren einer Metallplatte gemäß Anspruch 1, wobei das auf Polyester basierende Harz nicht weniger als 2 Mol-% und nicht mehr als 5 Mol-% an Ethylenisophthalateinheiten, bezogen auf 100 Mol-% der Gesamtheit der Wiederholungseinheiten des Polyesters, umfasst.

3. Ein laminierter Film zum Laminieren einer Metallplatte, erhalten durch Laminieren einer Haftklebeschicht auf den auf Polyester basierenden Film zum Laminieren einer Metallplatte gemäß Anspruch 1 oder 2.

4. Der laminierte Film zum Laminieren einer Metallplatte gemäß Anspruch 3, wobei das Harz, aus dem sich die Haftklebeschicht zusammensetzt, 80 Massen-% bis 100 Massen-% eines auf Polyester basierenden Harzes (B1), das im Wesentlichen aus Ethylenterephthalat besteht, und 0 Massen-% bis 20 Massen-% eines auf Polyester basierenden Harzes (B2), das eine von dem auf Polyester basierenden Harz (B1) verschiedene Zusammensetzung aufweist, umfasst, und das auf Polyester basierende Harz (B1) nicht weniger als 5 Mol-% und nicht mehr als 15 Mol-% an Ethylenisophthalateinheiten, bezogen auf 100 Mol-% der Gesamtheit der Wiederholungseinheiten des Polyesters, umfasst.

5. Der laminierte Film zum Laminieren einer Metallplatte gemäß Anspruch 4, wobei das auf Polyester basierende Harz (B1) Polyethylenterephthalat und Polyethylenisophthalat umfasst.

6. Der laminierte Film zum Laminieren einer Metallplatte gemäß Anspruch 4 oder 5, wobei das auf Polyester basierende Harz (B2) Polybutylenterephthalat ist.

7. Eine mit einem Film laminierte Metallplatte, umfassend eine Metallplatte und den laminierten Film zum Laminieren einer Metallplatte gemäß einem der Ansprüche 3 bis 6, erhalten durch Laminieren der Haftklebeschicht auf mindestens eine Oberfläche der Metallplatte.

8. Ein Metallbehälter, erhalten durch Formen der mit einem Film laminierten Metallplatte gemäß Anspruch 7.

## Revendications

1. Film à base de polyester pour stratifier une plaque métallique, formé à partir d'une composition contenant une résine à base de polyester constituée principalement de téréphtalate d'éthylène, dans lequel
la résine à base de polyester a une teneur totale en unités téréphtalate d'éthylène et en unités téréphtalate de diéthylène non inférieure à 95 % en moles et non supérieure à 98 % en moles, et une teneur en une unité autre que les unités téréphtalate d'éthylène et les unités téréphtalate de diéthylène de 2 à 5 % en moles, pour 100 % en moles des unités constitutives totales du polyester,
dans lequel l'unité autre que les unités téréphtalate d'éthylène et les unités téréphtalate de diéthylène contient une unité isophtalate d'éthylène, et
la teneur en fines particules inorganiques indéterminées est de 0,5 à 2,0 % en masse pour 100 % en masse de la composition, et dans lequel la résine à base de polyester a une viscosité intrinsèque de 0,5 à 0,7 dl/g quand elle est mesurée conformément au procédé décrit dans la description.

2. Film à base de polyester pour stratifier une plaque métallique selon la revendication 1, dans lequel la résine à base de polyester comprend pas moins de 2 % en moles et pas plus de 5 % en moles d'unités isophtalate d'éthylène, pour 100 % en moles des unités constitutives totales du polyester.

3. Film stratifié pour stratifier une plaque métallique, obtenu par stratification d'une couche adhésive sur le film à base de polyester pour stratifier une plaque métallique selon la revendication 1 ou 2.

4. Film stratifié pour stratifier une plaque métallique selon la revendication 3, dans lequel la résine constituant la couche adhésive comprend 80 à 100 % en masse d'une résine à base de polyester (B1) constituée principalement de téréphtalate d'éthylène, et 0 à 20 % en masse d'une résine à base de polyester (B2) ayant une composition différente de celle de la résine à base de polyester (B1), et la résine à base de polyester (B1) comprend pas moins de 5 % en moles et pas plus de 15 % en moles d'unités isophtalate d'éthylène, pour 100 % en moles des unités constitutives totales du polyester.

5. Film stratifié pour stratifier une plaque métallique selon la revendication 4, dans lequel la résine à base de polyester (B1) comprend du poly(téréphtalate d'éthylène) et du poly(isophtalate d'éthylène).

6. Film stratifié pour stratifier une plaque métallique selon la revendication 4 ou 5, dans lequel la résine à base de polyester (B2) est le poly(téréphtalate de butylène).

7. Plaque métallique stratifiée avec un film comprenant une plaque métallique et le film stratifié pour stratifier une plaque métallique selon l'une quelconque des revendications 3 à 6, obtenue par stratification de la couche adhésive sur au moins une surface de la plaque métallique.

8. Récipient métallique obtenu par moulage de la plaque métallique stratifiée avec un film selon la revendication 7.
